# EUROPÄISCHE PATENTSCHRIFT

(11) **EP 1 194 306 B1**
(45) Veröffentlichungstag und Bekanntmachung des Hinweises auf die Patenterteilung: **13.11.2002**
(21) Anmeldenummer: 00951357.3
(22) Anmeldetag: 07.07.2000
(51) Int. Cl.: B60K 17/04

(54) **RADANTRIEB**
WHEEL DRIVE
ENTRAINEMENT DE ROUES

(30) Priorität: 13.07.1999 DE 19932587
(43) Veröffentlichungstag der Anmeldung: 10.04.2002
(73) Patentinhaber: ZF FRIEDRICHSHAFEN Aktiengesellschaft, 88038 Friedrichshafen (DE)
(72) Erfinder: WENDL, Harald, 94474 Vilshofen (DE); BACHMANN, Max, 88339 Bad Waldsee (DE)
(86) Internationale Anmeldenummer: EP0006439
(87) Internationale Veröffentlichungsnummer: WO01003964

(56) Entgegenhaltungen:
- EP-A- 0 523 472
- DE-A- 19 709 577
- GB-A- 1 457 979

## Beschreibung

Die Erfindung betrifft einen Radantrieb für mobile Fahrzeuge, vorzugsweise Omnibusse, insbesondere Niederflur-Omnibusse, nach der im Oberbegriff von Anspruch 1 näher definierten Art, beispielsweise wie sie aus der GB-C-1457 979 bekannt sind.

Gattungsgemäße Radantriebe zeichnen sich dadurch aus, daß sie so im Fahrzeug einbaubar sind, daß sie in axialer Richtung möglichst wenig Bauraum beanspruchen, um z. B. in einem Omnibus eine größtmögliche Gangbreite zu erreichen. Hierzu sind Radantriebe so zu gestalten, daß der Hauptantriebsteil innerhalb einer Felge des Rades untergebracht werden kann. Radantriebe sind entweder über einen gemeinsamen Antriebsmotor, welcher über einen Momententeiler mit dem Radantrieb in Verbindung steht, oder über einen Antriebsmotor, welcher direkt mit dem Radantrieb verbunden ist, antreibbar.

Die EP 0 523 472 B1 offenbart eine Portalachse für einen Omnibus, bei welcher, um einen möglichst großen Portalabstand zu bekommen, ein Antriebsmotor über einen Momententeiler ein Zahnrad antreibt, welches einerseits mit einem äußeren Zentralrad in Verbindung steht und andererseits ein Zahnrad antreibt, welches als Zwischenrad ein weiteres Zahnrad antreibt, welches wiederum mit dem äußeren Zentralrad verbunden ist, wobei das äußere Zentralrad den Abtrieb bildet. Indem das angetriebene Zahnrad direkt mit dem äußeren Zentralrad in kämmender Verbindung steht, wird ein sehr großer Portalabstand erreicht, jedoch sind die Zahnbelastungen am angetriebenen Zahnrad sehr hoch, da das angetriebene Zahnrad nur zwei sich gegenüberliegende Zahneingriffe aufweist, über welche das Drehmoment des angetriebenen Zahnrades abgegeben werden kann. Dadurch müssen das angetriebene Zahnrad sowie die weiteren Zahnräder und das äußere Zentralrad in ihrem Durchmesser so ausgelegt werden, daß sie nur außerhalb der Felge angeordnet werden können.

Der vorliegenden Erfindung liegt die Aufgabe zugrunde, einen Radantrieb zu schaffen, durch welchen ein größtmöglicher Portalabstand realisiert werden kann und welcher so kompakt ausgeführt werden kann, daß zumindest das Untersetzungsgetriebe innerhalb des Felgendurchmessers angeordnet werden kann und eine größtmögliche Gangbreite im Fahrzeug erreicht wird, indem der Radantrieb axial kompakt ausgeführt ist.

Die Aufgabe wird mit einem, auch die kennzeichnenden Merkmale des Hauptanspruchs aufweisenden, gattungsgemäßen Radantrieb gelöst.

Erfindungsgemäß besteht der Radantrieb aus einem Untersetzungsgetriebe, bei welchem ein angetriebenes Zahnrad einerseits mit einem äußeren Zentralrad und andererseits mit mindestens zwei Zahnrädern in kämmender Verbindung steht, welche mit dem äußeren Zentralrad in trieblicher Verbindung stehen. Die Zahneingriffe des äußeren Zentralrades mit dem angetriebenen Zahnrad sowie die Zahneingriffe der weiteren Zahnräder mit dem angetriebenen Zahnrad sind so angeordnet, daß die Wirkungslinien der radialen Kräfte, welche durch die Zahneingriffe mit dem angetriebenen Zahnrad entstehen, sich in der Rotationsachse des angetriebenen Zahnrades treffen. Indem das angetriebene Zahnrad mindestens drei Zahneingriffe aufweist, über welche sich das Drehmoment verteilen kann, ist es möglich, das angetriebene Zahnrad, die weiteren Zahnräder und das äußere Zentralrad so kompakt auszuführen, daß dieses Untersetzungsgetriebe innerhalb des Felgendurchmessers angeordnet werden kann. Indem sich die Wirkungslinien der radialen Kräfte in der Rotationsachse des angetriebenen Zahnrades treffen, kann eine groß dimensionierte Lagerung des angetriebenen Zahnrades entfallen, da das angetriebene Zahnrad entweder schwimmend oder über eine geringfügige Lagerung gelagert werden kann. Durch die schwimmende Lagerung des angetriebenen Zahnrades und mindestens drei Zahneingriffen, deren Wirkungslinien sich in der Rotationsachse des angetriebenen Zahnrades treffen, kann sich das angetriebene Zahnrad unter Drehmomentbelastung so einstellen, daß alle Zahneingriffe gleichmäßig tragen, wodurch das Untersetzungsgetriebe kompakter ausgeführt werden kann. Vorzugsweise werden die Zahnräder, welche mit dem angetriebenen Zahnrad in kämmender Verbindung stehen, so angeordnet, daß der Winkel, welcher sich durch die Verbindung der Rotationsmittelpunkte der zwei Zahnräder mit dem Rotationsmittelpunkt des angetriebenen Zahnrades ergibt, kleiner als 120° ist. Indem dieser Winkel kleiner als 120° ausgeführt wird, ist es möglich, die Drehmomentbelastung nicht gleichmäßig auf die drei Zahneingriffe zu verteilen, sondern den Zahneingriff des angetriebenen Zahnrades mit dem äußeren Zentralrad, da hier die Krümmungsverhältnisse günstiger sind, mit einem größeren Drehmoment zu beaufschlagen, als der Zahneingriff des angetriebenen Zahnrades mit den weiteren Zahnrädern. Hierdurch können die weiteren Zahnräder kompakter ausgeführt werden. Vorzugsweise wird das angetriebene Zahnrad über einen elektrischen Antriebsmotor angetrieben. Der Antrieb kann jedoch auch über eine Antriebswelle aus einem Momententeiler erfolgen. Das äußere Zentralrad steht mit dem Abtrieb des Radantriebs in Verbindung über ein inneres Zentralrad einer Planetenstufe, wodurch die Gesamtübersetzung erhöht wird und der Antriebsmotor kompakter ausgeführt werden kann. Indem das Untersetzungsgetriebe infolge mehrerer Zahneingriffe am angetriebenen Zahnrad sehr kompakt ausgeführt ist und ein sehr großer Portalabstand erreicht wird, ist es mit der Erfindung möglich, eine Bremse, welche mit dem Abtrieb des Radantriebs verbunden ist, und einen Teil der Betätigungseinrichtung der Bremse innerhalb des Felgendurchmessers anzuordnen, so daß ein in axialer Richtung kompakter Radantrieb geschaffen wird. Durch die Anordnung der Untersetzungsgetriebe der Bremse sowie deren Betätigungseinrichtung und eines Teils des Antriebsmotors innerhalb der Felge, wobei der Massenschwerpunkt an der Radinnenseite angeordnet ist, wird eine Verbesserung der Federungseigenschaften erreicht.

Weitere erfindungswesentliche Merkmale sind den Figuren-Beschreibungen zu entnehmen.
Es zeigen:

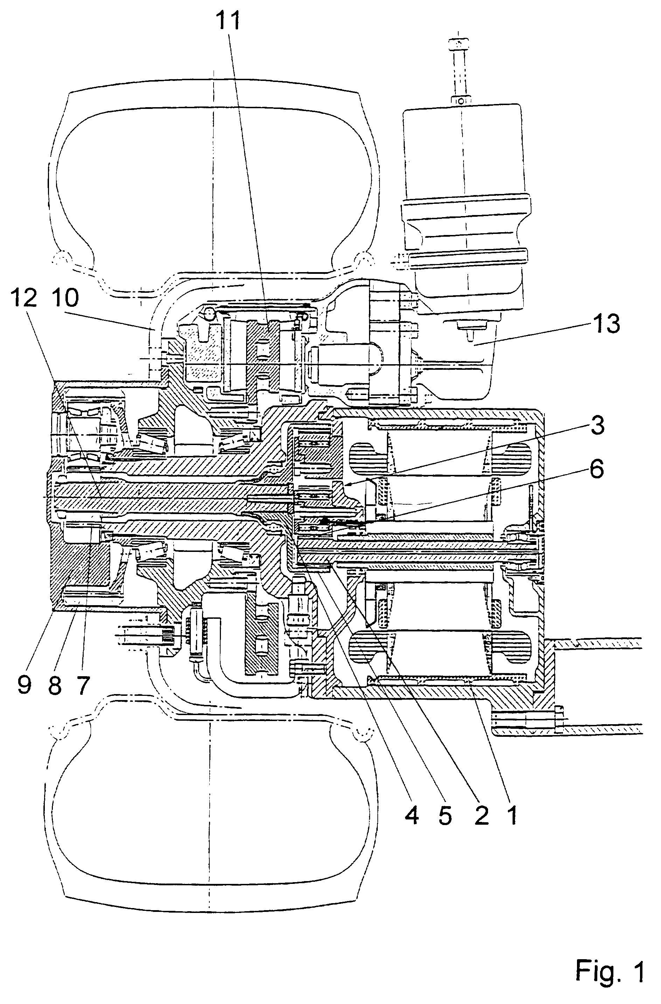

- Fig. 1: einen Radantrieb, bei welchem ein Elektromotor über Untersetzungsgetriebe ein Rad antreibt und

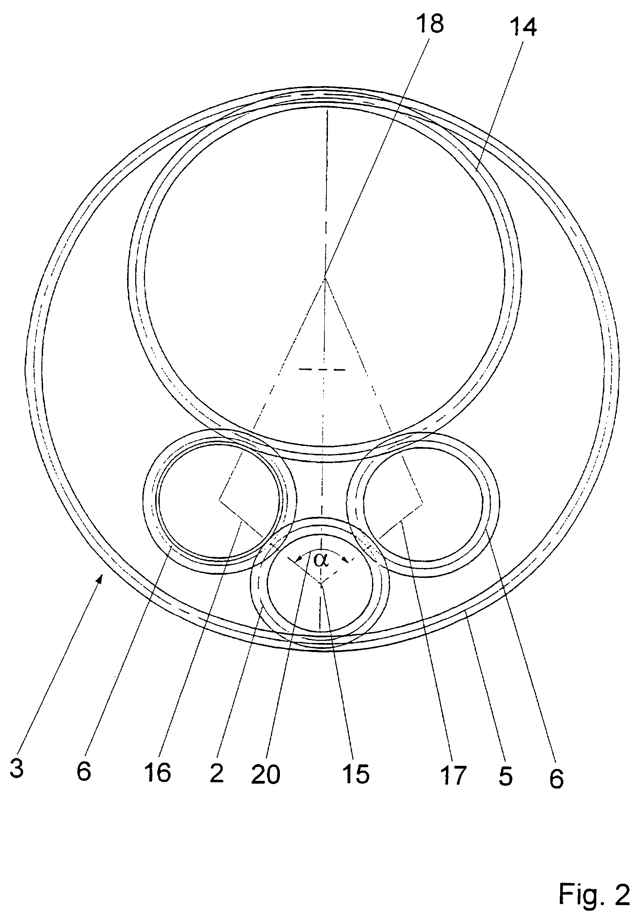

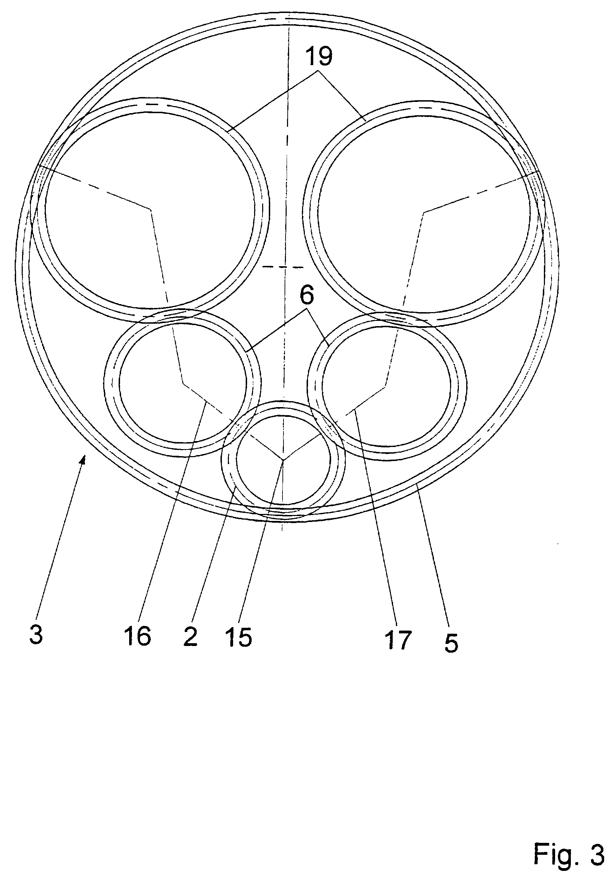

- Fig. 2 und 3: eine schematische Darstellung eines Untersetzungsgetriebes, bei welchem der Antrieb exzentrisch angeordnet ist.

### Fig. 1:

Ein Antriebsmotor 1, welcher als elektrischer oder hydraulischer Motor ausgebildet sein kann, ist mit einem angetriebenen Zahnrad 2 eines Untersetzungsgetriebes 3 verbunden, wobei das angetriebene Zahnrad 2 exzentrisch zum Abtrieb 4, welcher ein äußeres Zentralrad 5 bildet, angeordnet ist. Das angetriebene Zahnrad 2 kann jedoch auch über ein Ausgleichsgetriebe angetrieben werden. Das angetriebene Zahnrad 2 steht einerseits in kämmender Verbindung mit dem äußeren Zentralrad 5 und andererseits in kämmender Verbindung mit weiteren Zahnrädern 6, welche ebenfalls mit dem äußeren Zentralrad 5 in kämmender Verbindung stehen. Der Abtrieb 4 ist mit einem inneren Zentralrad 7 einer Planetenstufe 8 verbunden, deren Planetenträger 9 den Abtrieb bildet und mit einer Felge 10 verbunden ist. Das Untersetzungsgetriebe 3, die Planetenstufe 8 und eine Bremse 11 sind innerhalb der Felge 10 angeordnet, wodurch ein sehr kompakter Radantrieb geschaffen wird. Indem das angetriebene Zahnrad 2, bezogen auf die Radachse 12, exzentrisch angeordnet ist und das Untersetzungsgetriebe 3 durch die Drehmomentverteilung sehr kompakt ausgeführt werden kann, ist es möglich, einen Teil der Betätigungseinrichtung 13 der Bremse 11 innerhalb der Felge 10 anzuordnen, wodurch beim Einbau des Radantriebs in einen Niederflur-Omnibus eine größere Gangbreite erreicht werden kann. Vorzugsweise wird eine Betätigungseinrichtung 13 verwendet, deren Zylinder rechtwinklig zur Radachse 12 angeordnet ist, um die Gangbreite des Omnibusses zu vergrößern. Somit bildet die Betätigungseinrichtung 13 einen Bereich, welcher parallel zur Radachse 12 und welcher größtenteils innerhalb der Radfelge 10 angeordnet ist, und einen Bereich, welcher außerhalb der Radfelge 10 rechtwinklig zur Radachse 12, jedoch im axialen Bereich des Antriebsmotors 1, angeordnet ist. Das angetriebene Zahnrad 2 ist schwimmend oder weitgehend schwimmend im Untersetzungsgetriebe 3 angeordnet, wodurch sich ein optimaler Traganteil der Verzahnung ergibt.

### Fig. 2:

Ein angetriebenes Zahnrad 2 eines Untersetzungsgetriebes 3 steht in kämmender Verbindung mit einem äußeren Zentralrad 5 und zwei weiteren Zahnrädern 6, welche über ein Zahnrad 14 mit dem äußeren Zentralrad 5 trieblich verbunden sind. Das angetriebene schwimmend oder weitgehend schwimmend gelagerte Zahnrad 2 steht in kämmender Verbindung mit den Zahnrädern 6 und dem äußeren Zentralrad 5, welche so angeordnet sind, daß die entstehenden Radialkräfte durch die Zahneingriffe sich in der Rotationsachse 15 treffen und somit gegenseitig aufheben. Durch die kämmende Verbindung mit zwei Zahnrädern 6 und einem äußeren Zentralrad 5 wird das Drehmoment des angetriebenen Zahnrades 2 aufgeteilt, wodurch das Untersetzungsgetriebe 3 kompakt ausgeführt werden kann. Der Winkel 20, welcher durch die Linien 16 und 17 gebildet wird, ist so ausgelegt, daß dieser kleiner oder gleich 120° beträgt. Hierdurch wird gewährleistet, daß bei dem Zahneingriff des angetriebenen Zahnrades 2 zum Zahnrad 6 geringere Belastungen auftreten als bei dem Zahneingriff des angetriebenen Zahnrades 2 zum äußeren Zentralrad 5.

### Fig. 3:

Das angetriebene Zahnrad 2 des Untersetzungsgetriebes 3 steht in kämmender Verbindung mit zwei Zahnrädern 6 und einem äußeren Zentralrad 5. Die Zahnräder 6 kämmen mit zwei Zahnrädern 19, welche wiederum mit dem äußeren Zentralrad 5 in kämmender Verbindung stehen. Die Linien 16 und 17 treffen sich in der Rotationsachse 15 des angetriebenen Zentralrades 2. Hierdurch kann das angetriebene Zahnrad 2 schwimmend oder weitgehend schwimmend angeordnet werden.

### Bezugszeichen

- 1: Antriebsmotor
- 2: angetriebenes Zahnrad
- 3: Untersetzungsgetriebe
- 4: Abtrieb
- 5: äußeres Zentralrad
- 6: Zahnrad
- 7: inneres Zentralrad
- 8: Planetenstufe
- 9: Planetenträger
- 10: Felge
- 11: Bremse
- 12: Radachse
- 13: Betätigungseinrichtung
- 14: Zahnrad
- 15: Rotationsachse
- 16: Linie
- 17: Linie
- 18: Rotationsachse
- 19: Zahnrad
- 20: Winkel

## Patentansprüche

1. Radantrieb mit einem exzentrisch zur Radachse angetriebenen Zahnrad (2), welches mit einem äußeren Zentralrad (5) in kämmender Verbindung steht und das äußere Zentralrad (5) mit dem Abtrieb (4, 9) in trieblicher Verbindung steht, und das angetriebene Zahnrad (2) mit mindestens zwei weiteren Zahnrädern (6) in kämmender Verbindung steht, welche mit dem äußeren Zentralrad (5) in trieblicher Verbindung stehen und welche dergestalt angeordnet sind, daß die Linien (16, 17), welche senkrecht zu den Wirkungslinien durch die kämmenden Verbindungen des angetriebenen Zahnrades (2) entstehenden Umfangskräften angeordnet sind, sich in der Rotationsachse (15) des angetriebenen Zahnrades (2) treffen, **dadurch gekennzeichnet, daß** das äußere Zentralrad (5) über eine Planetenstufe (8) mit dem Abtrieb verbunden ist und eine Betätigungseinrichtung (13) einer Bremse (11) einen zur Radachse (12) parallel angeordneten Bereich aufweist, welcher größtenteils innerhalb einer Radfelge (10) angeordnet ist und einen zur Radachse (12) rechtwinklig angeordneten Bereich aufweist, welcher außerhalb der Radfelge (10) angeordnet ist.

2. Radantrieb nach Anspruch 1, **dadurch gekennzeichnet, daß** das angetriebene Zahnrad (2) von einem Elektromotor oder einem Hydraulikmotor oder über ein Ausgleichsgetriebe angetrieben wird.

3. Radantrieb nach Anspruch 1, **dadurch gekennzeichnet, daß** mindestens zwei weitere Zahnräder (6), welche mit dem angetriebenen Zahnrd (2) in kämmender Verbindung stehen, mit einem Zahnrad (14) in kämmender Verbindung stehen, welches mit dem äußeren Zentralrad (5) in kämmender Verbindung steht und dessen Rotationsmittelpunkt (18) mit dem Rotationsmittelpunkt (15) des angetriebenen Zahnrades (2) auf einer Geraden liegt.

4. Radantrieb nach Anspruch 1, **dadurch gekennzeichnet, daß** das angetriebene Zahnrad (2) mit zwei weiteren Zahnrädern (6) in kämmender Verbindung steht, welche mit zwei Zahnrädern (19) in kämmender Verbindung stehen, welche mit dem äußeren Zentralrad (5) in kämmender Verbindung stehen und deren Rotationsmittelpunkte auf einer Geraden liegen.

5. Radantrieb nach Anspruch 1, **dadurch gekennzeichnet, daß** die Betätigungseinrichtung (13) der Bremse (11) oberhalb im axialen Bereich des Elektromotors angeordnet ist.

6. Radantrieb nach Anspruch 1, **dadurch gekennzeichnet, daß** zwei Zahnräder (6), welche mit dem angetriebenen Zahnrad (2) in kämmender Verbindung stehen, so angeordnet sind, daß der Winkel (20), welcher sich durch die Verbindung der Rotationsmittelpunkte der zwei Zahnräder (6) mit dem Rotationsmittelpunkt (15) des angetriebenen Zahnrades (2) ergibt, kleiner oder gleich 120° ist.

## Claims

1. Wheel drive with a gearwheel (2) which is eccentrically driven with regard to the wheel axle and which is connected to an outer planetary gear (5) in an intermeshing manner, the outer planetary gear (5) being connected to the output (4, 9) in a driving manner and the driven gearwheel (2) being connected to at least two additional gearwheels (6) in an intermeshing manner, said additional gearwheels being connected to the outer planetary gear (5) in a driving manner and being arranged in such a way that the lines (16, 17) which are vertical in relation to the lines of action due to the circumferential forces of the intermeshing connections of the driven gearwheel (2) meet at the axis of rotation (15) of the driven gearwheel (2), **characterized in that** the outer planetary gear (5) is connected to the output via a planetary stage (8) and an actuating mechanism (13) of a brake (11) has an area which is perpendicular to the wheel axle (12), said area being mostly located within a wheel rim (10) and having an area which is perpendicular to the wheel axle (12) located outside of the wheel rim (10).

2. Wheel drive as per claim 1, **characterized in that** the driven gearwheel (2) is driven by an electric motor or a hydraulic motor or via a differential gear.

3. Wheel drive as per claim 1, **characterized in that** at least two additional gearwheels (6) which are connected to the driven gearwheel (2) in an intermeshing manner are connected to a gearwheel (14) in an intermeshing manner, the latter gearwheel being connected to the outer planetary gear (5) in an intermeshing manner and having a rotation midpoint (18) that is in a straight line with the rotation midpoint (15) of the driven gearwheel (2).

4. Wheel drive as per claim 1, **characterized in that** the driven gearwheel (2) is connected to.two additional gearwheels (6) in an intermeshing manner, said additional gearwheels being connected to two gearwheels (19) in an intermeshing manner, said two gearwheels being connected the outer planetary gear (5) in an intermeshing manner and having rotation midpoints in a straight line.

5. Wheel drive as per claim 1, **characterized in that** the actuating mechanism (13) of the brake (11) is located above in the axial area of the electric motor.

6. Wheel drive as per claim 1, **characterized in that** two gearwheels (6) which are connected to the driven gearwheel (2) in an intermeshing manner are arranged such that the angle (20) produced by the connection of the two rotation midpoints of the two gearwheels (6) to the rotation midpoint (15) of the driven gearwheel (2) is less than or equal to 120°.

## Revendications

1. Entraînement de roue comprenant une roue dentée (2) entraînée en position excentrée par rapport à l'axe de la roue, qui est en liaison par engrènement avec une roue centrale extérieure (5), et dans lequel la roue centrale extérieure (5) est en liaison cinématique avec l'organe de sortie (4, 9) et la roue dentée entraînée (2) est en liaison par engrènement avec au moins deux roues dentées additionnelles (6) qui sont en liaison cinématique avec la roue centrale extérieure (5) et qui sont disposées de telle manière que les lignes (16, 17), qui sont disposées perpendiculairement aux lignes d'action des forces circonférentielles engendrées par les liaisons par engrènement de la roue dentée entraînée (2), se rencontrent sur l'axe de rotation (15) de la roue dentée entraînée (2), **caractérisé en ce que** la roue centrale extérieure (5) est reliée à l'organe de sortie par l'intermédiaire d'un train épicycloïdal (8) et un dispositif d'actionnement (13) d'un frein (11) comporte une région disposée parallèlement à l'axe (12) de la roue qui est placée en majeure partie à l'intérieur d'une jante (10) de la roue et une région disposée perpendiculairement à l'axe (12) de la roue qui est placée en dehors de la jante (10) de la roue.

2. Entraînement de roue selon la revendication 1, **caractérisé en ce que** la roue dentée entraînée (2) est entraînée par un moteur électrique ou par un moteur hydraulique ou par l'intermédiaire d'un différentiel.

3. Entraînement de roue selon la revendication 1, **caractérisé en ce qu'**au moins deux dentées additionnelles (6), qui sont en liaison par engrènement avec la roue dentée entraînée (2), sont en liaison par engrènement avec une roue dentée (14) elle-même en liaison par engrènement avec la roue centrale extérieure (5) et dont le centre de rotation (18) se trouve sur la même droite que le centre de rotation (15) de la roue dentée entraînée (2).

4. Entraînement de roue selon la revendication 1, **caractérisé en ce que** la roue dentée entraînée (2) est en liaison par engrènement avec deux roues dentées additionnelles (6) qui sont en liaison par engrènement avec deux roues dentées (19) elles-mêmes en liaison par engrènement avec la roue centrale extérieure (5) et dont les centres de rotation se trouvent sur une droite.

5. Entraînement de roue selon la revendication 1, **caractérisé en ce que** le dispositif d'actionnement (13) du frein (11) est disposé au-dessus de la région axiale du moteur électrique.

6. Entraînement de roue selon la revendication 1, **caractérisé en ce que** deux roues dentées (6), qui sont en liaison par engrènement avec la roue dentée entraînée (2), sont disposées de manière que l'angle (20) formé par les lignes qui joignent les centres de rotation des deux roues dentées (6) au centre de rotation (15) de la roue dentée entraînée (2) est inférieur ou égal à 120°.
